# EUROPÄISCHE PATENTSCHRIFT

(11) **EP 1 044 368 B1**
(45) Veröffentlichungstag und Bekanntmachung des Hinweises auf die Patenterteilung: **20.02.2008**
(21) Anmeldenummer: 99955756.4
(22) Anmeldetag: 22.09.1999
(51) Int. Cl.: G01N 27/407

(54) **VERFAHREN ZUR HERSTELLUNG VON BORNITRID-DICHTSCHEIBEN AUS EINEM BORNITRID-BLOCK**
METHOD FOR PRODUCING BORON NITRIDE SEALING DISCS FROM A BORON NITRIDE BLOCK
PROCEDE DE PRODUCTION DE GARNITURES D'ETANCHEITE EN NITRURE DE BORE

(30) Priorität: 23.10.1998 DE 19848959
(43) Veröffentlichungstag der Anmeldung: 18.10.2000
(73) Patentinhaber: ROBERT BOSCH GMBH, 70442 Stuttgart (DE)
(72) Erfinder: WEYL, Helmut, D-71701 Schwieberdingen (DE); LEDER, Thomas, D-71254 Ditzingen (DE)
(86) Internationale Anmeldenummer: PCT/DE1999/003022
(87) Internationale Veröffentlichungsnummer: WO 2000/025122

(56) Entgegenhaltungen:
- EP-A- 0 195 417
- DE-A- 19 714 203
- US-A- 5 571 397
- PATENT ABSTRACTS OF JAPAN vol. 10, no. 280 (C-374), 24. September 1986 (1986-09-24) & JP 61 101523 A (TOSHIBA CHEM CORP)

## Beschreibung

Die Erfindung betrifft ein Verfahren zur Herstellung von Bornitrid-Dichtscheiben aus einem Bornitrid-Block mit den im Oberbegriff des Anspruchs 1 genannten Merkmalen.

### Stand der Technik

Es ist bekannt, zur Bestimmung von Sauerstoffkonzentrationen im Abgas von Verbrennungskraftmaschinen Meßfühler, insbesondere Lambda-Sonden, einzusetzen. Die Meßfühler sind unmittelbar dem Abgas der Verbrennungskraftmaschine ausgesetzt. Sie müssen daher eine erhebliche Beständigkeit gegen die Bestandteile des Kraftstoff-Luft-Gemisches aufweisen. Daher müssen insbesondere die dem eigentlichen Sensorbereich nachgeordneten Bestandteile durch geeignete Dichtungen geschützt werden. Da während des Betriebs Temperaturen von bis zu 600 °C auftreten können, müssen die verwendeten Dichtungen zusätzlich eine hohe Temperaturbeständigkeit und einen kleinen Ausdehnungskoeffizienten besitzen. Üblicherweise bestehen solche Dichtungen aus Bornitrid, das sich durch seine große Oxidationsbeständigkeit (verbrennt erst bei 1900 °C) auszeichnet. Solche BN-Dichtungen werden z.B. in US 5571397 beschrieben.

Während der Montage eines Meßfühlers wird ein Bornitrid-Dichtring zwischen zwei Steatitelementen innerhalb eines Sensorgehäuses angeordnet und bildet nachfolgend die Dichtung zwischen einer Meßgasseite und einer meßgasfernen Seite des Sensorelementes. Dabei sind die Anforderungen an die Toleranz des Bornitrid-Dichtringes eng, damit bei dem Verpreßvorgang kein Steatit zwischen die Bornitrid-Dichtung und das Sensorgehäuse geschoben wird. In den Fällen, in denen es zu einer Beschädigung des Steatit-Materials beziehungsweise zu einer Ablagerung von Steatit zwischen der Bornitrid-Dichtung und dem Sondengehäuse kommt, können an diesen Stellen gasförmige und/oder flüchtige Komponenten des Luft-Benzin-Gemisches die Dichtung passieren. Zur Vermeidung dieser Defekte sind demnach die räumlichen Abmessungen der Bornitrid-Dichtung in möglichst engen Toleranzen zu verwirklichen.

Bornitrid wird großtechnisch in Heißpreßverfahren bei Temperaturen von zirka 1900 °C und Drücken von zirka 120 Bar hergestellt. Dabei liegen handelsüblich Blöcke mit einer Kantenlänge von zirka 500 mm vor. In dem bisherigen Verfahren zur Herstellung von Bornitrid-Dichtungen wurden diese Blöcke in rechteckige Quader zersägt. Die einzelnen rechteckigen Quader wurden dann zu Rundstäben gedreht und nach Fräsen beziehungsweise Räumen der Innenkontur in einzelne Dichtungsringe der benötigten Länge aufgeteilt. Nachteilig bei diesem Verfahren ist der hohe Materialverbrauch des sehr kostspieligen Bornitrids. Des Weiteren weist das bisherige Verfahren eine erhebliche Taktzeit für die Herstellung einer Dichtung auf, da hier zur Herstellung einer größeren Anzahl von Dichtungen eine große Anzahl einzelner Arbeitsschritte erforderlich sind.

Die EP 0 195 417 A1 offenbart ein Herstellverfahren für beim horizontalen Stranggießen von Stahl verwendete Abreiß- oder Brechringe. Diese Ringe werden aus einem heißgepressten Block bestehend aus Bornitrid herausgeschnitten und auf Endform bearbeitet.

### Vorteile der Erfindung

Nach dem erfindungsgemäßen Herstellungsverfahren sollen die Bornitrid-Dichtscheiben in rationaler Weise in großen Stückzahlen und mit der erforderlichen Toleranz gefertigt werden. Entgegen dem bisherigen Verfahren erfolgen die Bearbeitungsschritte direkt an dem aus der großtechnischen Herstellung zur Verfügung gestellten Bornitrid-Block. Dieser wird vorzugsweise auf einer Bearbeitungsplattform aufgespannt, wobei die ersten Bearbeitungsschritte parallel zur Pressrichtung des Blocks erfolgen. Dies ist insbesondere deshalb wichtig, da sich die Materialeigenschaften bedingt durch die Herstellung senkrecht zur Pressrichtung unterscheiden (z.B. durch erhöhte Brüchigkeit). An dem eingespannten Bornitrid-Block werden nun nachfolgend die notwendigen Bearbeitungsschritte durchgerührt, wobei ein Werkzeugwechsel nicht zwischen den einzelnen Bearbeitungsschritten erfolgen muss. Nach dem bisherigen Verfahren wurden die aus dem Bornitrid-Block geschnittenen rechteckigen Quader zu Rundstäben gedreht, und diese werden dann durch Fräsen beziehungsweise Räumen und anschließendem Zuschnitt weiterverarbeitet. Bei der Bearbeitung mehrerer dieser Quader mußten nachfolgend immer wieder die benötigten Werkzeuge gewechselt werden und das Werkstück neu verspannt werden. Der Werkzeugwechsel in dem erfindungsgemäßen Herstellungsverfahren erfolgt vorteilhafterweise nur noch, nachdem der Arbeitsschritt (zum Beispiel Bohren oder Fräsen) nachfolgend an allen zur Herstellung von Bornitrid-Dichtscheiben geeigneten Positionen des Bornitrid-Blocks durchgeführt wurde. Damit kommt es zu einer erheblichen Zeiteinsparung.

Weiterhin vorteilhaft an dem erfindungsgemäßen Verfahren ist die Möglichkeit, eine erhöhte Anzahl von Dichtungen aus einem Bornitrid-Block zu formen. Dies ist insbesondere in Hinsicht auf die erheblichen Kosten des Materials wichtig. So wird die Außenkontur der Bornitrid-Dichtscheiben durch den Einsatz eines kreisförmigen Räumstempels erzeugt. In dem bisherigen Verfahren wurden die rechteckigen Bornitrid-Quader zu Rundstäben gedreht. Die Anordnung kreisförmiger Arbeitsbereiche kann hingegen zu einer sehr viel größeren Dichte dieser Elemente führen als die Verwendung rechteckiger Arbeitsbereiche nach dem bisherigen Verfahren. Somit kommt es nach dem erfindungsgemäßen Verfahren zu einer erheblichen Materialeinsparung.

Um die Taktzeiten zur Herstellung einer Bornitrid-Dichtscheibe zusätzlich zu verkürzen, kann nach dem erfindungsgemäßen Verfahren ein Arbeitsschritt durch die sinnvolle Anordnung mehrerer gleichartiger Werkzeuge gleichzeitig durchgeführt werden.

Weitere vorteilhafte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: einen Meßfühler zur Bestimmung von Sauerstoffkonzentrationen;
- Figur 2: eine Draufsicht auf eine Bornitrid-Dichtscheibe und
- Figur 3: eine schematische Darstellung eines Bornitrid-Blocks.

### Beschreibung des Ausführungsbeispiels

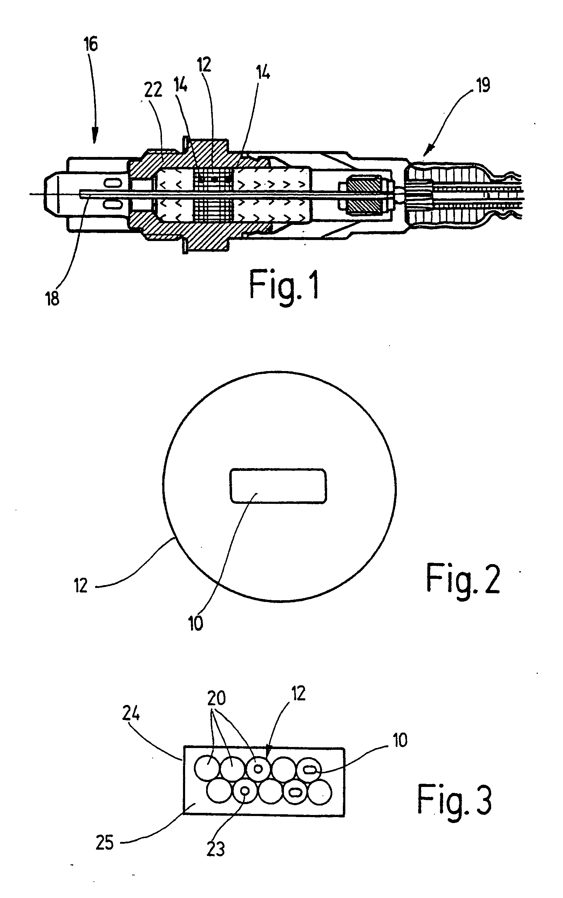

Figur 1 zeigt eine Meßsonde 16, die beispielsweise zur Bestimmung des Sauerstoffgehalts im Abgas von Verbrennungskraftmaschinen genutzt werden kann. Ein Sensorelement 18 wird dabei von dem Abgas umströmt. Um den meßgasfernen Teil 19 der Meßsonde vor dem schädigenden Einfluß flüssiger oder gasförmiger Bestandteile eines Luft-Kraftstoff-Gemisches zu schützen, ist die Meßsonde 16 mit einer Dichtung ausgestattet. Hierzu wird das Sensorelement 18 durch zwei Steatitelemente geführt, zwischen denen eine Bornitrid-Dichtscheibe 12 angeordnet ist. Ein Außendurchmesser der Bornitrid-Dichtscheibe 12 und der Steatitelemente 14 entspricht dem Innendurchmesser eines Gehäuses 22. Das Gehäuse 22 ist in eine das Abgas führende Leitung dichtend eingesetzt. Im Rahmen der vorliegenden Beschreibung soll auf den Aufbau und die Funktion der Meßsonde 16 nicht weiter eingegangen werden, da diese allgemein bekannt sind.

In der Figur 2 ist eine Draufsicht der Bornitrid-Dichtscheibe 12 dargestellt. Sie weist eine zentrosymmetrische Aussparung 10 auf. Diese Aussparung 10 ist üblicherweise rechteckig, wobei die Ecken abgerundet sind. Die räumliche Ausdehnung der Aussparung 10 entspricht den Maßen des Sensorelementes 18. Die Höhe der Bornitrid-Dichtscheibe 12 kann differieren.

In der Figur 3 ist eine Draufsicht eines Bornitrid-Blocks 24 dargestellt. Der Block 24 wird nach dem erfindungsgemäßen Verfahren auf einer Bearbeitungsplattform eingespannt. Die erste Bearbeitungsrichtung (senkrecht in die Papierebene der Darstellung hinein) ist dabei parallel zu der bei der Herstellung des Bornitrid-Blocks 24 aufgewandten Druckrichtung. Zunächst wird eine Innenkontur der Bornitrid-Dichtscheiben durch folgende Arbeitsschritte geformt.

In einem ersten Arbeitsschritt werden mit einem oder mehreren Kernlochbohrern kreisförmige Ausbohrungen 23 vorgenommen. Die während der Bohrung entstehenden Stäube werden vorteilhafterweise direkt am Werkzeug abgesaugt. Aufgrund der selbstschmierenden Eigenschaften des hexagonalen Bornitrids sind zusätzliche Schmierstoffe überflüssig. In einem zweiten Arbeitsschritt werden die kreisförmigen Ausbohrungen 23 (sind nur teilweise dargestellt) mittels eines oder mehrerer Fingerfräser ausgefräst. Auch in diesem sowie weiterfolgenden Arbeitsschritten werden die entstehenden Stäube vorteilhafterweise abgesaugt. Nach dem Fräsen weisen die Rohlinge 20 die zentrosymmetrischen Aussparungen 10 (sind nur teilweise dargestellt) auf.

Nachdem die Innenkontur ausgeformt ist, erfolgt eine Ausformung einer Außenkontur. Das Räumen der Außenkontur der Bornitrid-Dichtscheiben 12, das heißt das Entfernen von nicht belegten Bereichen 25 des Blocks 24, kann mit einem oder mehreren, entsprechend gestalteten kreisförmigen Räumstempeln durchgeführt werden. Hierdurch entstehen zylinderförmige Rohlinge 20. Insgesamt sind die einzelnen Rohlinge 20 in dichter Weise auf dem Bornitrid-Block 24 angeordnet, wie hier schematisch aus der Figur 3 ersichtlich ist. Der - im Querschnitt betrachtet - zur Verfügung stehende Platz wird optimal ausgenutzt.

Das Zuschneiden der einzelnen Bornitrid-Dichtscheiben 12 (parallel zur Papierebene der Darstellung) erfolgt durch das schichtweise Abtrennen der außen und innen fertig konturierten Rohlinge 20 mittels eines dünnwandigen Scheibenfräsers. Während dieses Arbeitsschrittes muß die Staubabsaugung über ein Sieb erfolgen, um die fertigen Bornitrid-Dichtscheiben 12 vom Staub zu trennen. Anschließend werden die gefertigten Bornitrid-Dichtscheiben 12 durch ein weiteres Sieb, dessen Maschengröße dem Durchmesser der Scheibe entspricht, getrennt. Hierdurch lassen sich vor allem Scheiben aussortieren, die an der Außenkontur fehlerhafte Ausformungen aufweisen.

## Patentansprüche

1. Verfahren zur Herstellung von Bornitrid-Dichtscheiben, für Meßfühler zur Bestimmung der Sauerstoffkonzentration in Abgasen von Verbrennungskraftmaschinen, aus einem Bornitrid-Block, **dadurch gekennzeichnet, daß** eine Vielzahl von Bornitrid-Dichtscheiben (12) gleichzeitig im Verbund hergestellt werden.

2. Verfahren nach Anspruch 1, **dadurch gekennzeichnet, daß** in einer ersten Arbeitsrichtung eine Außen- und Innenkontur der Bornitrid-Dichtscheiben (12) durch gleichzeitiges Bohren, Fräsen und/oder Stanzen von miteinander verbundenen Rohlingen (20) aus einem Bornitrid-Block (24) geformt wird.

3. Verfahren nach einem der vorhergehenden Ansprüche, **dadurch gekennzeichnet, daß** eine Höhe der Bornitrid-Dichtscheiben (12) durch schichtweises Abtrennen senkrecht zu der ersten Arbeitsrichtung eingestellt wird.

4. Verfahren nach Anspruch 3, **dadurch gekennzeichnet, daß** das schichtweise Abtrennen durch eine Scheibenfräse erfolgt.

5. Verfahren nach einem der vorhergehenden Ansprüche, **dadurch gekennzeichnet, daß** während der einzelnen Arbeitsschritte Bohren, Fräsen, Stanzen und schichtweisem Abtrennen eine Staubabsaugung erfolgt.

6. Verfahren nach einem der vorhergehenden Ansprüche, **dadurch gekennzeichnet, daß** eine Separation und eine Qualitätseinstufung der Bornitrid-Dichtscheiben (12) durch ein- oder mehrfaches Absieben erfolgt.

## Claims

1. Method for producing boron nitride sealing discs, for sensors for determining the oxygen concentration in exhaust gases of internal combustion engines, from a boron nitride block, **characterized in that** a multiplicity of boron nitride sealing discs (12) are produced simultaneously in combination.

2. Method according to Claim 1, **characterized in that** an outer and an inner contour of the boron nitride sealing discs (12) are formed from a boron nitride block (24) in a first working direction by simultaneous drilling, milling and/or stamping of blanks (20) connected to one another.

3. Method according to either of the preceding claims, **characterized in that** a height of the boron nitride sealing discs (12) is set by cutting off in layers perpendicularly to the first working direction.

4. Method according to Claim 3, **characterized in that** the cutting off in layers is effected by a side milling cutter.

5. Method according to one of the preceding claims, **characterized in that** dust extraction is effected during the individual operations of drilling, milling, stamping and cutting off in layers.

6. Method according to one of the preceding claims, **characterized in that** separation and quality classification of the boron nitride sealing discs (12) are effected by single or multiple screening.

## Revendications

1. Procédé de fabrication de rondelles d'étanchéité en nitrure de bore, pour des capteurs de mesure servant à déterminer la concentration en oxygène dans les gaz d'échappement de moteurs à combustion interne, à partir d'un bloc de nitrure de bore,
**caractérisé en ce qu'**
on fabrique simultanément une combinaison d'un grand nombre de rondelles d'étanchéité en nitrure de bore (12).

2. Procédé selon la revendication 1,
**caractérisé en ce que**
dans une première installation d'usinage, on forme le contour extérieur et le contour intérieur des rondelles d'étanchéité en nitrure de bore (12) en perçant, fraisant et/ou en matriçant simultanément des ébauches (20) reliées les unes aux autres dans un bloc de nitrure de bore (24).

3. Procédé selon l'une des revendications précédentes,
**caractérisé en ce qu'**
on règle la hauteur des rondelles d'étanchéité en nitrure de bore (12) par séparation, couche par couche, perpendiculairement à la première direction d'usinage.

4. Procédé selon la revendication 3,
**caractérisé en ce que**
la séparation couche par couche se fait par une fraise à disque.

5. Procédé selon l'une des revendications précédentes,
**caractérisé en ce qu'**
on aspire la poussière pendant les différentes étapes de travail de perçage, fraisage, matriçage et séparation couche par couche.

6. Procédé selon l'une des revendications précédentes,
**caractérisé en ce qu'**
on effectue une séparation et un classement par qualité des rondelles d'étanchéité en nitrure de bore (12) par une sélection simple ou multiple.
